# EUROPEAN PATENT APPLICATION

(11) **EP 4 806 951 A1**
(43) Date of publication of application: **16.09.2026**
(21) Application number: 26164217.7
(22) Date of filing: 12.03.2026
(51) Int. Cl.: C08K 5/5313, C08K 3/32, C08K 3/38, C08K 5/52, C08K 5/5317, C08L 77/06, C08K 5/3492

(54) **FLAME RETARDANT ADDITIVE COMPOSITION AND USE THEREOF**

(30) Priority: 13.03.2025 CN 202510293854
(71) Applicant: Shanghai Kingfa Sci. & Tech. DVPT. Co., Ltd., Qingpu, Shanghai 201714 (CN); KINGFA SCI. & TECH. CO., LTD., Guangzhou, Guangdong 510663 (CN); Liaoning Kingfa Biomaterial Co., Ltd., Panjin City, Liaoning Province 124000 (CN)
(72) Inventor: Li, Jide, Shanghai, 201714 (CN); Chen, Pingxu, Shanghai, 201714 (CN); Ye, Nanbiao, Shanghai, 201714 (CN); Jing, Xinke, Shanghai, 201714 (CN); Liu, Zhen, Shanghai, 201714 (CN); Tan, Xiaobin, Shanghai, 201714 (CN); Tang, Ming, Shanghai, 201714 (CN)
(74) Representative: Petraz, Gilberto Luigi

(57) **Abstract**

The present invention provides an additive composition and use thereof. The additive composition includes, in parts by mass, the following components: 65-84 parts of aluminum diethylphosphinate, 7-16 parts of melamine polyphosphate, 7.5-16 parts of a flame retardant synergist, and 0.1-1 part of aluminum alkylphosphite; and a mass percentage content of water in the additive composition is 0.4%-0.6%. According to the present invention, through the design and mutual synergy of the components and the control of the water content, the additive composition has excellent flame retardant performance, stability, and precipitation resistance. The additive composition is used for flame retardation of polymer systems, especially enabling that a polyamide composition containing the same has excellent flame retardant performance, flame retardant stability, and resistance to high temperature and high humidity, and still maintains excellent flame retardance after high-temperature and high-humidity aging. Moreover, the problem of additive precipitation is inhibited or avoided, thereby greatly improving comprehensive performance of flame-retardant polyamides.

## Description

### TECHNICAL FIELD

The present invention belongs to the technical field of polymer additives, and particularly relates to an additive composition and use thereof.

### BACKGROUND

Aluminum diethylphosphinate is a halogen-free and environmentally friendly flame retardant, which is a white powder in appearance, is insoluble in water and most organic solvents and easily soluble in strong acid and strong alkali solutions, has characteristics such as high-efficiency flame retardance, high thermal stability, low smoke, small particle size, low specific gravity, and good dispersibility and compatibility, and has been widely used for flame retardation of products such as thermoplastic plastics (such as PPA, PA66, and PBT), fibers, and textiles.

The aluminum diethylphosphinate has unsatisfactory flame-retardant efficiency when used alone, and usually needs to be used in combination with other flame retardants. For example, US6365071B1 discloses a synergistic flame retardant for polymers, which includes aluminum diethylphosphinate and a nitrogen-containing compound, and the nitrogen-containing compound includes benzoguanamine, tris(hydroxyethyl) isocyanurate, melamine cyanurate, melamine polyphosphate, melamine pyrophosphate, etc.; and the synergistic flame retardant has a better flame-retardant synergistic effect than the aluminum diethylphosphinate used alone. CN112812366A discloses a flame-retardant composition, which includes the following components: 55-65 wt% of aluminum diethylphosphinate, 15-26 wt% of melamine polyphosphate, 10-15 wt% of melamine cyanurate, 4-8 wt% of organically modified montmorillonite, and 0-5 wt% of aluminum phosphite; and a flame-retardant material containing the composition can be decomposed during combustion to form a coke layer, the coke layer has roles of a thermal-insulation and oxygen-barrier protective layer, nitrogen-containing compounds in the flame-retardant composition also have foaming and coke enhancement effects, and the aluminum phosphite can play a synergistic flame-retardant effect, enabling that the prepared flame-retardant material has good flame retardance and can maintain good mechanical properties.

Currently, compound flame-retardant systems based on the aluminum diethylphosphinate have been widely used in the field of halogen-free and flame-retardant glass fiber reinforced engineering plastics. Common systems include: an aluminum diethylphosphinate and melamine polyphosphate (MPP) compound system, an aluminum diethylphosphinate and melamine cyanurate (MCA) compound system, and an aluminum diethylphosphinate and aluminum phosphite system. These systems have advantages such as high flame-retardant efficiency, high temperature resistance, and low loss of properties of resin matrices. However, it has been found through the research on a flame-retardant process of thermoplastic nylon that whether the aluminum diethylphosphinate is used alone or in combination with melamine polyphosphate and others to form a compound flame retardant, flame-retardant nylon materials have the problem of a decrease in flame retardant performance under high temperature and high humidity conditions.

Additionally, it has also been found through research that existing flame retardant additives have an obvious precipitation problem. The precipitation of flame retardants not only leads to white fume-like substances appearing on the surfaces of flame-retardant material products to affect product appearance, but also leads to a decrease in flame retardant performance of the materials to bring environmental pollution, which is a serious quality problem for products requiring high fire protection standards. Therefore, solving the precipitation problem of the flame retardants is of great significance for improving product quality.

Therefore, a flame retardant additive is expected to be developed in the field, which is used for flame retardation of polymers such as polyamides (nylon), enabling that the polymers still maintain excellent flame retardant performance under high temperature and high humidity conditions, and the additive is difficult to precipitate.

### SUMMARY

In view of the shortcomings of the prior art, an objective of the present invention is to provide an additive composition and use thereof. Through the design and mutual compounding of components, the additive composition has excellent flame retardant performance and stability, enabling that a polyamide composition containing the same has excellent flame retardance and maintains excellent flame retardant stability in a high temperature and high humidity environment. Meanwhile, the problem of additive precipitation is inhibited or avoided.

To achieve the objective, the present invention adopts the following technical solutions.

In a first aspect, the present invention provides an additive composition, where the additive composition includes, in parts by mass, the following components:
65-84 parts of aluminum diethylphosphinate,
7-16 parts of melamine polyphosphate,
7.5-16 parts of a flame retardant synergist, and
0.1-1 part of aluminum alkylphosphite; and
a mass percentage content of water in the additive composition is 0.4%-0.6%.

The additive composition provided by the present invention includes a combination of the aluminum diethylphosphinate, the melamine polyphosphate, the flame retardant synergist, and the aluminum alkylphosphite. Through the design and mutual synergy of the four components, the additive composition has excellent flame retardant performance, stability, and precipitation resistance. Meanwhile, the additive composition contains a specific proportion of water, which can further enhance the stability and precipitation resistance of the additive composition. The additive composition is used for flame retardation of polymer systems, enabling that a polyamide composition containing the same has excellent flame retardant performance, flame retardant stability, and resistance to high temperature and high humidity, and still maintains excellent flame retardance after high-temperature and high-humidity aging. Moreover, the problem of additive precipitation is inhibited or avoided, thereby greatly improving comprehensive performance of flame-retardant polyamides.

The following shows preferred technical solutions of the present invention, but is not intended to limit the technical solutions provided by the present invention. Through the following preferred technical solutions, the objectives and beneficial effects of the present invention can be better achieved and realized.

In the present invention, the aluminum diethylphosphinate is 65-84 parts by mass, and for example, may be 66 parts, 68 parts, 70 parts, 71 parts, 72 parts, 73 parts, 74 parts, 75 parts, 76 parts, 77 parts, 78 parts, 79 parts, 80 parts, 81 parts, 82 parts, or 83 parts, as well as specific point values among the above point values. For the sake of space and brevity, the specific point values included within the range are not exhaustively enumerated in the present invention.

In the present invention, a mass percentage content of the aluminum diethylphosphinate as a main component of the additive composition is preferably ≥ 60%, and for example, may be 62%, 65%, 66%, 68%, 70%, 72%, 75%, 78%, 80%, 82%, or 84%, as well as specific point values among the above point values. For the sake of space and brevity, the specific point values included within the range are not exhaustively enumerated in the present invention.

The melamine polyphosphate is 7-16 parts by mass, and for example, may be 8 parts, 9 parts, 10 parts, 11 parts, 12 parts, 13 parts, 14 parts, or 15 parts, as well as specific point values among the above point values. For the sake of space and brevity, the specific point values included within the range are not exhaustively enumerated in the present invention.

Preferably, a mass percentage content of the melamine polyphosphate in the additive composition is ≥ 5%, and for example, may be 6%, 8%, 9%, 10%, 11%, 12%, 13%, 14%, 15%, or 16%, as well as specific point values among the above point values. For the sake of space and brevity, the specific point values included within the range are not exhaustively enumerated in the present invention.

The flame retardant synergist is 7.5-16 parts by mass, and for example, may be 8 parts, 9 parts, 10 parts, 11 parts, 12 parts, 13 parts, 14 parts, or 15 parts, as well as specific point values among the above point values. For the sake of space and brevity, the specific point values included within the range are not exhaustively enumerated in the present invention.

Preferably, a mass percentage content of the flame retardant synergist in the additive composition is ≥ 5%, and for example, may be 6%, 7%, 7.5%, 8%, 9%, 10%, 11%, 12%, 13%, 14%, 15%, or 16%, as well as specific point values among the above point values. For the sake of space and brevity, the specific point values included within the range are not exhaustively enumerated in the present invention.

The aluminum alkylphosphite is 0.1-1 part by mass, and for example, may be 0.2 part, 0.3 part, 0.4 part, 0.5 part, 0.6 part, 0.7 part, 0.8 part, or 0.9 part, as well as specific point values among the above point values. For the sake of space and brevity, the specific point values included within the range are not exhaustively enumerated in the present invention.

Preferably, a mass percentage content of the aluminum alkylphosphite in the additive composition is ≥ 0.05%, and for example, may be 0.1%, 0.15%, 0.2%, 0.3%, 0.4%, 0.5%, 0.6%, 0.7%, 0.8%, 0.9%, or 1%, as well as specific point values among the above point values. For the sake of space and brevity, the specific point values included within the range are not exhaustively enumerated in the present invention.

The water in the additive composition may be crystal water and/or free water. As crystal water, the water may be combined with any one or at least two of the aluminum diethylphosphinate, the melamine polyphosphate, the flame retardant synergist, the aluminum alkylphosphite, optionally aluminum ethylbutylphosphite, optionally aluminum monoethylphosphite, and optionally aluminum phosphite.

The mass percentage content of the water in the additive composition is 0.4%-0.6%, and for example, may be 0.42%, 0.45%, 0.48%, 0.5%, 0.52%, 0.55%, or 0.58%, as well as specific point values among the above point values. For the sake of space and brevity, the specific point values included within the range are not exhaustively enumerated in the present invention.

In the present invention, the water (crystal water and/or free water) in the additive composition is not specifically limited in source, and as crystal water and/or free water, may be derived from any one or at least two of the aluminum diethylphosphinate, the melamine polyphosphate, the flame retardant synergist, the aluminum alkylphosphite, optionally the aluminum ethylbutylphosphite, optionally the aluminum monoethylphosphite, and optionally the aluminum phosphite; if all the aforementioned components do not contain water or have an extremely low water content, water may also be introduced into the composition by an external addition method; and if the aforementioned components have a higher water content, a part of water may also be removed by a drying method, enabling that the mass content of the water in the additive composition is 0.4%-0.6%.

For polymers with polar groups in molecular chains (such as polyamides), their water absorption is also relatively strong, and a water absorption amount is related to relative humidity, water temperature, time, etc. Moisture absorption characteristics of the polyamides are caused by a combination effect of the breaking of hydrogen bonds in their molecular chains and the formation of hydrogen bonds by water molecules. After moisture absorption, the moisture adsorbed into the polyamides alters the microstructure of the molecules, leading to changes in various properties of polyamide materials. Humidity conditioning of the polyamides refers to a process of controlling humidity and temperature by utilizing the water absorption characteristics of the polyamides to achieve an optimal water content in the polyamide materials. The purpose of humidity conditioning treatment is to enable the polyamide materials to reach a balanced water content in a specific use environment, thereby ensuring stable performance. The presence of moisture during flame-retardant modification of the polyamides leads to hydrolysis of macromolecular chains of the polyamides and a decrease in relative molecular weight, thereby leading to a decrease in comprehensive mechanical properties of the polyamides. Therefore, during modification of the polyamides, it generally needs to ensure that the polyamides do not absorb water or pre-drying treatment needs to be performed.

It has been found during research in the present invention that by controlling the mass content of the water in the additive composition to be 0.4%-0.6%, a flame-retardant modified polyamide composite material containing the additive composition can achieve excellent effects in terms of flame retardance, flame retardant stability, and precipitation resistance under the premise of not destroying the mechanical properties of the polyamides. If the mass content of the water is < 0.4%, the stability of the additive composition is affected, enabling that a polyamide composition containing the additive composition has a decrease in flame retardant performance after high-temperature and high-humidity aging; and if the content of the water is > 0.6%, degradation of a macromolecular chain of a polyamide resin is caused, thereby leading to a decrease in performance of the polyamide composition.

Exemplarily, the mass content of the water in the additive composition may be tested by an infrared heating volatilization method; and for example, a sample to be tested is placed in an infrared moisture analyzer (Model MA 35, Sartorius, Germany) at a temperature of 120°C for 30 min, and then the mass content of water is automatically tested.

Preferably, the flame retardant synergist includes any one or a combination of at least two of zinc borate, zirconium phosphate, zinc selenate, sodium antimonate, and antimony oxide, further preferably zinc borate.

Preferably, the aluminum alkylphosphite includes aluminum ethylphosphite and/or aluminum butylphosphite, further preferably aluminum ethylphosphite.

Preferably, the additive composition further includes, in parts by mass, 0.1-3 parts of aluminum ethylbutylphosphite, where the aluminum ethylbutylphosphite may be 0.2, 0.3 part, 0.5 part, 0.8 part, 1 part, 1.2 parts, 1.5 parts, 1.8 parts, 2 parts, 2.2 parts, 2.5 parts, or 2.8 parts by mass, as well as specific point values among the above point values. For the sake of space and brevity, the specific point values included within the range are not exhaustively enumerated in the present invention.

And/or, preferably, the additive composition further includes, in parts by mass, 0.01-0.8 part of aluminum monoethylphosphite, where the aluminum monoethylphosphite may be 0.02 part, 0.05 part, 0.08 part, 0.1 part, 0.2 part, 0.3 part, 0.4 part, 0.5 part, 0.6 part, or 0.7 part by mass, as well as specific point values among the above point values. For the sake of space and brevity, the specific point values included within the range are not exhaustively enumerated in the present invention.

Preferably, the additive composition further includes aluminum phosphite.

Preferably, the aluminum phosphite in the additive composition is ≤ 1 part by mass, and for example, may be 0, 0.1 part, 0.2 part, 0.3 part, 0.4 part, 0.5 part, 0.6 part, 0.7 part, 0.8 part, or 0.9 part, as well as specific point values among the above point values. For the sake of space and brevity, the specific point values included within the range are not exhaustively enumerated in the present invention.

In one preferred technical solution, the additive composition includes, in parts by mass, the following components:
65-84 parts of the aluminum diethylphosphinate,
7-16 parts of the melamine polyphosphate,
7.5-16 parts of the flame retardant synergist,
0.1-1 part of the aluminum alkylphosphite,
0.1-3 parts of the aluminum ethylbutylphosphinate,
0.01-0.8 part of the aluminum monoethylphosphite, and
0-1 part of the aluminum phosphite; and
the mass percentage content of the water in the additive composition is 0.4%-0.6%.

In the present invention, the aluminum diethylphosphinate, the melamine polyphosphate, the flame retardant synergist, the aluminum alkylphosphite, the aluminum ethylbutylphosphinate, the aluminum monoethylphosphite, and the aluminum phosphite may be purchased through commercial channels or prepared by synthesis methods known in the field.

Exemplarily, a method for preparing the additive composition includes: uniformly mixing the aluminum diethylphosphinate, the melamine polyphosphate, the flame retardant synergist, the aluminum alkylphosphite, optionally the aluminum ethylbutylphosphinate, optionally the aluminum monoethylphosphite, and optionally the aluminum phosphite to obtain the additive composition.

In one preferred technical solution, after the uniform mixing, the mass content of the water in the mixture is tested. If the mass content of the water is 0.4%-0.6%, the additive composition is obtained.

In another preferred technical solution, after the uniform mixing, the mass content of the water in the mixture is tested. If the mass content of the water is < 0.4%, water is added into the mixture to control the mass content of the water to be 0.4%-0.6%, thereby obtaining the additive composition.

Preferably, a method for adding the water includes: placing the mixture in a humid environment to absorb water.

Optionally, a humidity of the humid environment is 80-98%, and for example, may be 82%, 85%, 88%, 90%, 92%, 95%, or 96%, etc.

Optionally, a temperature of the humid environment is 15-38°C, for example, may be 16°C, 18°C, 20°C, 22°C, 25°C, 26°C, 28°C, 30°C, 32°C, or 35°C, etc., and is further preferably room temperature/normal temperature.

In another preferred technical solution, after the uniform mixing, the mass content of the water in the mixture is tested. If the mass content of the water is > 0.6%, the mixture is dried to control the mass content of the water to be 0.4%-0.6%, thereby obtaining the additive composition.

In a second aspect, the present invention provides use of the additive composition as described in the first aspect in a polymer material.

Preferably, the additive composition is used as a flame retardant in the polymer material.

Preferably, the polymer material includes any one or a combination of at least two of a polyamide, a polyester, a polyurethane, a styrene-based polymer, a polyolefin, a polyphenylene ether, and a polyacrylate.

In a third aspect, the present invention provides a polyamide composition, where the polyamide composition includes a polyamide and the additive composition as described in the first aspect.

Preferably, the polyamide composition includes, in parts by mass, the following:
40-99 parts of the polyamide, and
5-35 parts of the additive composition.

Preferably, the polyamide is 40-99 parts by mass, and for example, may be 45 parts, 50 parts, 55 parts, 60 parts, 65 parts, 70 parts, 75 parts, 80 parts, 85 parts, 90 parts, 95 parts, or 98 parts, as well as specific point values among the above point values. For the sake of space and brevity, the specific point values included within the range are not exhaustively enumerated in the present invention.

In the polyamide composition, a mass percentage content of the polyamide as a matrix material is preferably ≥ 40, and for example, may be 42%, 45%, 50%, 55%, 60%, 65%, 70%, 75%, 80%, 85%, 90%, 95%, or 98%, as well as specific point values among the above point values. For the sake of space and brevity, the specific point values included within the range are not exhaustively enumerated in the present invention.

Preferably, the additive composition is 5-35 parts by mass, and for example, may be 6 parts, 8 parts, 10 parts, 12 parts, 15 parts, 18 parts, 20 parts, 22 parts, 25 parts, 28 parts, 30 parts, 32 parts, or 34 parts, as well as specific point values among the above point values. For the sake of space and brevity, the specific point values included within the range are not exhaustively enumerated in the present invention.

The additive composition can play a highly efficient flame-retardant effect. Preferably, a mass percentage content of the additive composition in the polyamide composition is ≥ 4%, and for example, may be 5%, 6%, 8%, 10%, 12%, 15%, 18%, 20%, 22%, 25%, 28%, 30%, 32%, or 35%, as well as specific point values among the above point values. For the sake of space and brevity, the specific point values included within the range are not exhaustively enumerated in the present invention. The mass percentage content is further preferably 6%-30%.

Preferably, the polyamide includes any one or a combination of at least two of a polyamide resin and a polyamide elastomer.

The polyamide includes any one or a combination of at least two of a condensation product of a dicarboxylic acid and a diamine, a condensation product of ω-amino acid, and a ring-opening polymerization product of lactam. The dicarboxylic acid exemplarily includes, but is not limited to: any one or a combination of at least two of adipic acid, sebacic acid, dodecanedioic acid, terephthalic acid, and isophthalic acid. The diamine exemplarily includes, but is not limited to: any one or a combination of at least two of pentamethylenediamine, hexamethylenediamine, decamethylenediamine, dodecanediamine, butanediamine, p-phenylenediamine, and m-phenylenediamine. The lactam exemplarily includes, but is not limited to: any one or a combination of at least two of caprolactam, octalactam, undecalactam, and dodecalactam. The ω-amino acid exemplarily includes, but is not limited to: any one or a combination of at least two of ω-amino acid formed by ring-opening of the aforementioned lactam, and aminobenzoic acid.

Preferably, the polyamide includes any one or a combination of at least two of polyamide 6 (polycaprolactam), polyamide 11 (polyundecalactam), polyamide 12 (polydodecalactam), polyamide 56 (polyadipoylpentamethylenediamine), polyamide 66 (polyadipoylhexamethylenediamine), polyamide 610 (polysebacoylhexamethylenediamine), polyamide 612 (polydodecanedioylhexamethylenediamine), polyamide 1010 (polysebacoyldecamethylenediamine), polyamide 1012 (polydodecanedioyldecamethylenediamine), polyamide 1212 (polydodecanedioyldodecamethylenediamine), polyamide 6T (polyterephthaloylhexamethylenediamine), polyamide 10T (polyterephthaloyldecamethylenediamine), and PPA (polyp-phthaloylp-phenylenediamine).

It should be noted that the polyamide composition of the present invention may further include any other fillers, other additives, etc. that are motivated to be added in the field.

Preferably, the polyamide composition further includes, in parts by mass, 5-45 parts of a reinforcing material, and the reinforcing material may be 6 parts, 8 parts, 10 parts, 15 parts, 20 parts, 25 parts, 30 parts, 35 parts, 40 parts, 42 parts, or 44 parts, as well as specific point values among the above point values. For the sake of space and brevity, the specific point values included within the range are not exhaustively enumerated in the present invention.

Preferably, the reinforcing material includes glass fiber and/or carbon fiber, further preferably glass fiber.

Preferably, the glass fiber includes any one or a combination of at least two of alkali-free glass fiber (E-glass fiber), medium-alkali glass fiber (C-glass fiber), highalkali glass fiber (A-glass fiber), special glass fiber (S-glass fiber), D-glass fiber, and quartz glass fiber.

Preferably, the polyamide composition further includes any one or a combination of at least two of a lubricant, an antioxidant, and a colorant.

Preferably, the polyamide composition further includes, in parts by mass, 0.01-1 part of the lubricant, and the lubricant may be 0.05 part, 0.1 part, 0.2 part, 0.3 part, 0.4 part, 0.5 part, 0.6 part, 0.7 part, 0.8 part, or 0.9 part, as well as specific point values among the above point values. For the sake of space and brevity, the specific point values included within the range are not exhaustively enumerated in the present invention.

Preferably, the lubricant includes any one or a combination of at least two of an ester lubricant, an alcohol lubricant, a hydrocarbon lubricant, a fatty acid lubricant, a fatty acid amide lubricant, and a metallic soap lubricant.

Preferably, the polyamide composition further includes, in parts by mass, 0.01-1 part of the antioxidant, and the antioxidant may be 0.05 part, 0.1 part, 0.2 part, 0.3 part, 0.4 part, 0.5 part, 0.6 part, 0.7 part, 0.8 part, or 0.9 part, as well as specific point values among the above point values. For the sake of space and brevity, the specific point values included within the range are not exhaustively enumerated in the present invention.

Preferably, the antioxidant includes any one or a combination of at least two of a hindered amine antioxidant, a hindered phenol antioxidant, a phosphite antioxidant, and a thioester antioxidant.

Preferably, the polyamide composition further includes, in parts by mass, 0.01-3 parts of the colorant, and the colorant may be 0.05 part, 0.1 part, 0.2 part, 0.5 part, 0.8 part, 1 part, 1.2 parts, 1.5 parts, 1.8 parts, 2 parts, 2.2 parts, 2.5 parts, or 2.8 parts, as well as specific point values among the above point values. For the sake of space and brevity, the specific point values included within the range are not exhaustively enumerated in the present invention.

In the present invention, the colorant is not particularly limited, any colorant suitable for a polymer system is applicable to the present invention, the colorant may be any one or a combination of at least two of a pigment powder, a pigment paste, and a color masterbatch, and the color of the colorant may be adjusted according to appearance demands of products.

Preferably, the polyamide composition further includes a filler and/or an ultraviolet absorber.

In one preferred technical solution, the polyamide composition includes, in parts by mass, the following components:
40-99 parts of the polyamide,
5-45 parts of the reinforcing material,
5-35 parts of the additive composition,
0-1 part of the antioxidant,
0-1 part of the lubricant, and
0-3 parts of the colorant.

Exemplarily, a method for preparing the polyamide composition includes: subjecting various components of the polyamide composition to melt blending and then extrusion to obtain the polyamide composition.

Preferably, the melt blending is performed in a screw extruder.

Preferably, the screw extruder is a twin-screw extruder.

Preferably, a temperature of the screw extruder is 180-330°C, and for example, may be 190°C, 200°C, 210°C, 220°C, 230°C, 240°C, 250°C, 260°C, 270°C, 280°C, 290°C, 300°C, 310°C, or 320°C, as well as specific point values among the above point values. For the sake of space and brevity, the specific point values included within the range are not exhaustively enumerated in the present invention.

Preferably, after the extrusion, the method further includes steps of granulation and drying.

Compared with the prior art, the present invention has the following beneficial effects.

In the additive composition provided by the present invention, through the design and mutual synergy of the aluminum diethylphosphinate, the melamine polyphosphate, the flame retardant synergist, and the aluminum alkylphosphite, the additive composition has excellent flame retardant performance and stability. Meanwhile, the additive composition contains a specific proportion of water, which can further enhance the stability and precipitation resistance of the additive composition. The additive composition is used for flame retardation of polymer systems, especially enabling that the polyamide composition containing the same has excellent flame retardant performance, flame retardant stability, and resistance to high temperature and high humidity, and still maintains excellent flame retardance after high-temperature and high-humidity aging. Moreover, the problem of additive precipitation is inhibited or avoided, thereby greatly improving comprehensive performance of flame-retardant polyamides.

### DETAILED DESCRIPTION OF EMBODIMENTS

The technical solutions of the present invention are further described below through specific embodiments. Those skilled in the art should understand that examples described are merely to facilitate an understanding of the present invention and should not be regarded as specific limitations to the present invention.

The terms "comprise", "include", "have", "contain", or any other variations thereof used herein are intended to cover non-exclusive inclusions. For example, a composition, step, method, product, or device that comprises listed elements is not necessarily limited only to those elements, but may also include other elements not explicitly listed or elements inherent in such composition, step, method, product, or device.

In the following specific embodiments, the content of water in each mixture and additive composition is tested by an infrared heating volatilization method. The method is specifically as follows: placing 5±0.1 g of a sample to be tested in an infrared moisture analyzer (MA 35, Sartorius, Germany) at a temperature of 120°C for 30 min, and then automatically testing the mass content of water. Several examples of the additive composition of the present invention are exemplarily listed below. In the following examples, information of materials used is shown in the following table:

| Material | Source |
|---|---|
| Aluminum diethylphosphinate (ADP) | BEP-22E, purchased from Zhuhai Jinfa Biomaterials |
| Melamine polyphosphate (MPP) | Budit 3141, purchased from Budenheim |
| Zinc borate | ZB-503, purchased from Anhui Estone |
| Aluminum ethylphosphinate | Prepared according to a method in Example 2 of CN104371142A |
| Aluminum ethylbutylphosphinate | Prepared according to a method in Example 4 of CN103172670A |
| Aluminum monoethylphosphinate | Prepared according to a method in Example 1 of CN103172670A |
| Aluminum phosphite | Hubei Baerdi |

### Examples 1-8 and Comparative Examples 1-6

An additive composition is provided, with the types and use amounts of various components shown in Table 1. The unit for each component, except for water, is "parts by mass"; and the water content is mass content in the unit of "%".

**Table 1**

| | ADP | MPP | Zinc borate | Aluminum ethylbutyl phosphina te | Aluminu m ethylpho sphinate | Alumi num phosp hite | Aluminum monoethyl phosphinat e | Water content (%) |
|---|---|---|---|---|---|---|---|---|
| Example 1 | 77.27 | 10 | 10 | 2.3 | 0.12 | 0 | 0.05 | 0.4 |
| Example 2 | 76.73 | 10 | 10 | 2.5 | 0.28 | 0 | 0.17 | 0.5 |
| Example 3 | 77.66 | 10 | 10 | 0.8 | 0.15 | 0.3 | 0.7 | 0.59 |
| Example 4 | 79.75 | 8 | 10 | 0.8 | 0.15 | 0.3 | 0.7 | 0.48 |
| Example 5 | 73.88 | 8 | 15 | 0.8 | 0.79 | 0.3 | 0.7 | 0.53 |
| Example 6 | 72.75 | 15 | 10 | 0.8 | 0.15 | 0.3 | 0.7 | 0.55 |
| Example 7 | 74.75 | 15 | 8 | 0.8 | 0.15 | 0.3 | 0.7 | 0.56 |
| Example 8 | 67.75 | 15 | 15 | 0.8 | 0.15 | 0.3 | 0.7 | 0.53 |
| Comparati ve Example 1 | 77.66 | 10 | 10 | 0.8 | 0.15 | 0.3 | 0.7 | 0.18 |
| Comparati ve Example 2 | 77.66 | 10 | 10 | 0.8 | 0.15 | 0.3 | 0.7 | 0.7 |
| Comparati ve Example 3 | 77.66 | 10 | 10 | 0.8 | 0 | 0.3 | 0.7 | 0.59 |
| Comparati ve Example 4 | 77.66 | 10 | 10 | 0.8 | 1.2 | 0.3 | 0.7 | 0.59 |
| Comparati ve Example 5 | 77.66 | 20 | 0 | 0.8 | 0.15 | 0.3 | 0.7 | 0.59 |
| Comparati ve Example 6 | 77.66 | 0 | 20 | 0.8 | 0.15 | 0.3 | 0.7 | 0.59 |

A method for preparing the additive composition provided in Examples 1-8 and Comparative Examples 3-6 is as follows:
(1) weighing ADP, MPP, zinc borate, aluminum ethylphosphinate, aluminum ethylbutylphosphinate, aluminum monoethylphosphinate, and optionally aluminum phosphite, uniformly mixing various components by a ribbon mixer for 30 min in a dry and closed environment at normal temperature to obtain a mixture, namely the additive composition with component contents as shown in Table 1, and placing the mixture in an aluminum foil bag, followed by vacuumizing and sealing for later use; and
(2) testing the mass content of water in the mixture, and if it is within a range of 0.4%-0.6%, obtaining the additive composition. If the mass content of water is < 0.4%, a sample is placed in an environment at a humidity of 95% and at 25°C to stand and absorb water to control the mass content of water in a product to be 0.4%-0.6% to obtain the additive composition. If the mass content of water is > 0.6%, the mixture is placed in an oven for drying at 60°C to control the mass content of water in a product to be 0.4%-0.6% to obtain the additive composition.

A method for preparing the additive composition provided in Comparative Example 1 is as follows: placing the additive composition provided in Example 3 in an oven for drying at 60°C to enable the mass content of water in a product to be 0.18% to obtain the additive composition.

A method for preparing the additive composition provided in Comparative Example 2 is as follows: placing the additive composition provided in Example 3 in an environment at 25°C and at a humidity of 95% to stand and absorb water to enable the mass content of water in a product to be 0.7% to obtain the additive composition.

The polyamide composition of the present invention is described in detail below by taking application examples as examples, but the polyamide composition is not limited to these application examples.

In the following application examples, specific information of materials used is as follows:

| | Brand and manufacturer |
|---|---|
| Polyamide 66 (PA66) | PA66 EPR24, Henan Pingdingshan Shenma Engineering Plastics Co., Ltd. |
| Polyamide 6 (PA6) | PA6 M2000, Guangdong Xinhui Meida Nylon Co., Ltd. |
| Glass fiber | ECS10-03-568H, China Jushi Co., Ltd. |
| Additive compositions A1-A8 | Examples 1-8 |
| Additive compositions D1-D6 | Comparative Examples 1-6 |
| Lubricant | TR044W, Struktol, Germany |
| Antioxidant 1098 | Tianjin Rianlon New Materials Co., Ltd. |
| Antioxidant 168 | Tianjin Rianlon New Materials Co., Ltd. |
| Colorant: black masterbatch | N54/1044, Colloids, the United Kingdom |

### Application Examples 1-9 and Comparative Application Examples 1-8

A polyamide composition is provided, with the types and use amounts of various components shown in Tables 2 and 3. The unit for each component is "parts by mass"; and "--" represents that the component is not added.

A method for preparing the polyamide composition includes: uniformly mixing a polyamide, a lubricant, an antioxidant, and a black masterbatch according to formulation amounts, and then feeding the same into a main feed port of a screw by a loss-in-weight feeder at a set weight ratio; respectively feeding glass fiber and an additive composition into first and second side feed ports of the screw by a loss-in-weight feeder at a set ratio, where a screw rotation speed of a twin-screw extruder is 350 rpm, and temperatures of zones 1-12 are respectively 80°C, 120°C, 260°C, 250°C, 220°C, 220°C, 220°C, 220°C, 220°C, 220°C, 250°C, and 260°C; and performing melt mixing and extrusion granulation to obtain a polyamide composition particle.

The following performance tests are conducted on the polyamide composition.
(1) Flame retardance: A sample to be tested was prepared into a sample strip of 125 mm × 13 mm × 1.6 mm by injection molding, and tested according to the ANSI/UL-94-1985 standard, where "t₁+t₂" represents afterflame time in the unit of s.
(2) Flame retardant performance after high-temperature and high-humidity aging: A sample to be tested was prepared into a sample strip of 125 mm × 13 mm × 1.6 mm by injection molding, placed in a damp-heat aging chamber for aging at 85°C and at a humidity of 85% for 168 h, taken out, and then tested by the method in (1) to obtain the flame retardant performance.
(3) Precipitation condition: A sample to be tested was prepared into a sample strip of 125 mm × 13 mm × 1.6 mm by injection molding, placed in a damp-heat aging chamber for aging at 85°C and at a humidity of 85% for 168 h, and then visually observed to obtain a precipitation condition on a surface of the sample strip. If many white spots (> 5) visible to the naked eyes are precipitated on each sample strip, obvious precipitation is obtained; if few white spots (1-5) are precipitated, slight precipitation is obtained; if precipitation that is not visible to the naked eyes and is observed by an electron microscope at a magnification of 200-1,000, trace precipitation is obtained; and if no precipitation is observed, no precipitation is obtained.
(4) Bending strength: The bending strength before and after aging was tested according to a method in the standard GB/T9341-2008 under the following aging conditions: aging in a damp-heat aging chamber at 85°C and at a humidity of 85% for 168 h.

Various test data are shown in Tables 2 and 3.

**Table 2**

| | | Applic ation Examp le 1 | Applic ation Examp le 2 | Applic ation Examp le 3 | Applic ation Examp le 4 | Applic ation Examp le 5 | Applic ation Examp le 6 | Applic ation Examp le 7 | Applic ation Examp le 8 | Applic ation Examp le 9 |
|---|---|---|---|---|---|---|---|---|---|---|
| Polya mide | PA66 | 53 | 53 | 53 | 53 | 53 | 53 | 43 | -- | 50 |
| | PA6 | -- | -- | -- | -- | -- | -- | 10 | 53 | 7 |
| Additi ve compo sition | Type | A1 | A2 | A3 | A4 | A5 | A6 | A7 | A8 | A3 |
| | Use amount | 20 | 20 | 20 | 20 | 20 | 20 | 20 | 20 | 16 |
| Glass fiber | | 25 | 25 | 25 | 25 | 25 | 25 | 25 | 25 | 25 |
| Lubricant | | 0.4 | 0.4 | 0.4 | 0.4 | 0.4 | 0.4 | -- | 0.4 | 0.4 |
| Antiox idant | 1098 | 0.3 | 0.3 | 0.3 | 0.3 | 0.3 | -- | 0.3 | 0.3 | 0.3 |
| | 168 | 0.3 | 0.3 | 0.3 | 0.3 | 0.3 | -- | 0.3 | 0.3 | 0.3 |
| Black masterbatch | | 1 | 1 | 1 | 1 | 0.5 | 1 | 1.5 | 1 | 1 |

| Performance tests | | | | | | | | | | |
|---|---|---|---|---|---|---|---|---|---|---|
| Flame retardance (UL94) | | V-0 | V-0 | V-0 | V-0 | V-0 | V-0 | V-0 | V-0 | V-0 |
| t₁+t₂ (s) | | 3.9 | 4.1 | 4.8 | 5 | 6.3 | 5.1 | 5.3 | 7.7 | 8.0 |
| Bending strength (MPa) | | 188 | 183 | 186 | 180 | 187 | 187 | 185 | 179 | 189 |
| After damp-heat aging | UL94 | V-0 | V-0 | V-0 | V-0 | V-0 | V-0 | V-0 | V-0 | V-0 |
| | t₁+t₂ (s) | 5.8 | 6.7 | 5.1 | 8.3 | 7.5 | 8.9 | 6.3 | 9.8 | 9.6 |
| Precipitation condition | | No precip itation | No precip itation | No precipi tation | No precip itation | No precip itation | Trace precipi tation | Trace precip itation | Trace precip itation | Trace precipi tation |
| Bending strength after aging (MPa) | | 185 | 181 | 182 | 179 | 184 | 182 | 181 | 177 | 187 |

**Table 3**

| | | Compar ative Applica tion Exampl e 1 | Compar ative Applica tion Exampl e 2 | Compar ative Applica tion Exampl e 3 | Compar ative Applica tion Exampl e 4 | Compar ative Applica tion Exampl e 5 | Compar ative Applica tion Exampl e 6 | Compar ative Applica tion Exampl e 7 | Compar ative Applica tion Exampl e 8 |
|---|---|---|---|---|---|---|---|---|---|
| Polyami de | PA66 | 53 | 53 | 53 | 53 | 53 | 53 | 50 | 50 |
| | PA6 | -- | -- | -- | -- | -- | -- | 7 | 7 |
| Additiv e composi tion | Type | D1 | D2 | D3 | D4 | D5 | D6 | D1 | D2 |
| | Use amoun t | 20 | 20 | 20 | 20 | 20 | 20 | 16 | 16 |
| Glass fiber | | 25 | 25 | 25 | 25 | 25 | 25 | 25 | 25 |
| Lubricant | | 0.4 | 0.4 | 0.4 | 0.4 | 0.4 | 0.4 | 0.4 | 0.4 |
| Antioxi dant | 1098 | 0.3 | 0.3 | 0.3 | 0.3 | 0.3 | 0.3 | 0.3 | 0.3 |
| | 168 | 0.3 | 0.3 | 0.3 | 0.3 | 0.3 | 0.3 | 0.3 | 0.3 |
| Black masterbatch | | 1 | 1 | 1 | 1 | 1 | 1 | 1 | 1 |

| Performance tests | | | | | | | | | |
|---|---|---|---|---|---|---|---|---|---|
| Flame retardance (UL94) | | V-0 | V-0 | V-0 | V-1 | V-0 | V-2 | V-0 | V-0 |
| t₁+t₂ (s) | | 3.8 | 5.2 | 5.8 | 15.7 | 3.1 | 27.1 | 8.5 | 8.9 |
| Bending strength (MPa) | | 184 | 174 | 181 | 185 | 180 | 188 | 186 | 178 |
| After damp-heat aging | UL94 | V-1 | V-2 | V-0 | V-2 failed to reach | V-1 | V-2 | V-2 | V-2 |
| | t₁+t₂ (s) | 18.2 | 27.1 | 7.1 | > 30 and drippin g | 13.5 | 23.5 | 21.2 | 28.3 |
| Precipitation condition | | Slight precipit ation | Slight precipit ation | Slight precipit ation | Slight precipit ation | Obviou s precipit ation | No precipit ation | Slight precipit ation | Slight precipit ation |
| Bending strength after aging (MPa) | | 179 | 165 | 178 | 180 | 178 | 182 | 180 | 168 |

It can be seen from the performance data in Table 2 that in the additive composition provided by the present invention, through the design and synergistic compounding of various components and the control of the specific water content, it has excellent flame retardant performance, stability, and precipitation resistance. The additive composition is used for flame-retardant modification of polyamides, enabling that the polyamide composition achieves flame retardance at grade V-0 and still maintains flame retardance at grade V-0 after damp-heat aging under double 85 conditions for 168 h, with no additive precipitation or only trace precipitation.

It can be known by comparison of the data in Tables 2 and 3 that in Comparative Application Examples 1 and 7, the water content in the additive composition D1 is too low, leading to an obvious decrease in flame retardance and precipitation of an auxiliary agent of the flame-retardant polyamide composition using the same after damp-heat aging; and in Comparative Application Examples 2 and 8, the water content in the additive composition is too high, which not only leads to the problems of obvious deterioration of flame retardance and precipitation of an auxiliary agent of the polyamide composition after damp-heat aging, but also worsens mechanical properties. In Comparative Application Examples 3-6, the additive compositions D3-D6 do not contain compound systems of defined components and specific use amounts of the present invention, leading to an obvious decrease in one or more of flame retardance, stability, and precipitation resistance; and when the additive compositions are used for flame-retardant modification of a polyamide material, the flame retardance of the polyamide composition after damp-heat aging is obviously decreased, and the amount of precipitation is increased.

The applicant declares that the additive composition and use thereof of the present invention are illustrated by the above examples, but the present invention is not limited to the above examples, that is, it does not mean that the present invention needs to rely on the above examples to be implemented. Those skilled in the art should understand that any improvements to the present invention, equivalent substitutions of various raw materials in products of the present invention, addition of auxiliary ingredients, and selections of specific methods all fall within the scope of protection and the scope of disclosure of the present invention.

## Claims

1. An additive composition, comprising, in parts by mass, the following components:
65-84 parts of aluminum diethylphosphinate,
7-16 parts of melamine polyphosphate,
7.5-16 parts of a flame retardant synergist, and
0.1-1 part of aluminum alkylphosphite; and
a mass percentage content of water in the additive composition being 0.4%-0.6%.

2. The additive composition according to claim 1, wherein the flame retardant synergist comprises any one or a combination of at least two of zinc borate, zirconium phosphate, zinc selenate, sodium antimonate, and antimony oxide, preferably zinc borate.

3. The additive composition according to claim 1, wherein the aluminum alkylphosphite comprises aluminum ethylphosphite and/or aluminum butylphosphite, preferably aluminum ethylphosphite.

4. The additive composition according to claim 1, further comprising, in parts by mass, 0.1-3 parts of aluminum ethylbutylphosphite;
and/or, further comprising, in parts by mass, 0.01-0.8 part of aluminum monoethylphosphite.

5. The additive composition according to claim 1, further comprising aluminum phosphite, wherein
preferably, the aluminum phosphite in the additive composition is ≤ 1 part by mass.

6. Use of the additive composition according to any one of claims 1-5 in a polymer material, wherein
preferably, the additive composition is used as a flame retardant in the polymer material.

7. A polyamide composition, comprising a polyamide and the additive composition according to any one of claims 1-5.

8. The polyamide composition according to claim 7, comprising, in parts by mass, the following:
40-99 parts of the polyamide, and
5-35 parts of the additive composition.

9. The polyamide composition according to claim 8, further comprising, in parts by mass, 5-45 parts of a reinforcing material, wherein
preferably, the reinforcing material comprises glass fiber and/or carbon fiber, further preferably glass fiber.

10. The polyamide composition according to claim 8, further comprising any one or a combination of at least two of a lubricant, an antioxidant, and a colorant, wherein
preferably, the polyamide composition further comprises, in parts by mass, 0.01-1 part of the lubricant;
preferably, the polyamide composition further comprises, in parts by mass, 0.01-1 part of the antioxidant; and
preferably, the polyamide composition further comprises, in parts by mass, 0.01-3 parts of the colorant.
